# FASCICULE DE BREVET EUROPEEN

(11) **EP 3 162 612 B1**
(45) Date de publication et mention de la délivrance du brevet: **04.07.2018**
(21) Numéro de dépôt: 16195330.2
(22) Date de dépôt: 24.10.2016
(51) Int. Cl.: B60L 15/20

(54) **PROCÉDÉ DE PILOTAGE DE L'ALIMENTATION D'UN MOTEUR DE VÉHICULE DE TRANSPORT ET DISPOSITIF ASSOCIÉ**
VERFAHREN ZUR STEUERUNG EINER FAHRZEUGSTROMZUFUHR UND STEUEREINHEIT
METHOD FOR CONTROLLING THE SUPPLY OF A TRANSPORT VEHICLE ENGINE AND ASSOCIATED DEVICE

(30) Priorité: 28.10.2015 FR 1560318
(43) Date de publication de la demande: 03.05.2017
(73) Titulaire: ALSTOM Transport Technologies, 93400 Saint-Ouen (FR)
(72) Inventeur: PERIOT, Robert, 64460 LAMAYOU (FR)
(74) Mandataire: Lavoix

(56) Documents cités:
- C.R. AKLI, X. ROBOAM, B. SARENI, A. JEUNESSE: "Energy management and sizing of a hybrid locomotive", EUROPEAN CONFERENCE ON POWER ELECTRONICS AND APPLICATIONS, 2007, 2 septembre 2007 (2007-09-02), XP002762091,
- JAAFAR A ET AL: "Sizing and Energy Management of a Hybrid Locomotive Based on Flywheel and Accumulators", IEEE TRANSACTIONS ON VEHICULAR TECHNOLOGY, IEEE SERVICE CENTER, PISCATAWAY, NJ, US, vol. 58, no. 8, 1 octobre 2009 (2009-10-01), pages 3947-3958, XP011270414, ISSN: 0018-9545, DOI: 10.1109/TVT.2009.2027328
- RAVEY A ET AL: "Energy-Source-Sizing Methodology for Hybrid Fuel Cell Vehicles Based on Statistical Description of Driving Cycles", IEEE TRANSACTIONS ON VEHICULAR TECHNOLOGY, IEEE SERVICE CENTER, PISCATAWAY, NJ, US, vol. 60, no. 9, 1 novembre 2011 (2011-11-01), pages 4164-4174, XP011506849, ISSN: 0018-9545, DOI: 10.1109/TVT.2011.2158567
- S. LU ET AL: "Analysis of energy storage devices in hybrid railway vehicles", IET INTERNATIONAL CONFERENCE ON RAILWAY ENGINEERING 2008 (ICRE 2008), 1 janvier 2008 (2008-01-01), pages 68-73, XP055303688, DOI: 10.1049/ic:20080014 ISBN: 978-962-442-297-9

## Description

La présente invention concerne un procédé et un dispositif électronique de pilotage de l'alimentation d'un moteur électrique d'un véhicule de transport.

Le document de C.R. AKLI intitulé « Energy management and sizing of a hybrid locomotive » et le document de JAAFAR A ET AL intitulé « Sizing and Energy Management of a Hybrid Locomotive Based on Flywheel and Accumulators » décrivent chacun une stratégie de gestion de l'alimentation de moteurs électriques d'un véhicule ferroviaire hybride.

On connaît en outre des procédés d'optimisation de l'énergie dans un véhicule ferroviaire. La demande de brevet AU 2008 201906 A1 décrit, par exemple, une optimisation en temps réel de la conduite d'un véhicule ferroviaire afin de minimiser l'énergie consommée en fonction de différents paramètres extérieurs. Les paramètres extérieurs sont le lieu, le temps, etc...

Toutefois, de tels procédés ne sont pas adaptés à des véhicules de transport de type hybride, c'est-à-dire comportant plusieurs sources d'énergie distinctes.

En outre, les procédés connus dans l'état de la technique sont basés sur des fonctions d'optimisation déterminées qui n'évoluent pas en fonction des trajets précédemment effectués par le véhicule le long d'un même parcours. En particulier, ces procédés ne tirent pas avantage du fait qu'un véhicule, tel qu'un véhicule ferroviaire, circule fréquemment le long d'un même parcours dont les caractéristiques ne varient pas.

Le but de l'invention est de proposer une solution permettant d'optimiser l'énergie consommée par un véhicule de transport de type hybride, en pilotant l'utilisation respective de différentes sources d'énergie.

A cet effet, l'invention a pour objet un procédé de pilotage selon la revendication 1. Suivant d'autres aspects avantageux de l'invention, le procédé de pilotage comprend une ou plusieurs des caractéristiques suivantes, selon les revendications dépendantes 2 à 3.

L'invention a également pour objet un dispositif électronique de pilotage selon la revendication 4.

Suivant d'autres aspects avantageux de l'invention, le dispositif comprend une ou plusieurs des caractéristiques suivantes, selon les revendications dépendantes 5 et 6.

L'invention a également pour objet un véhicule selon la revendication 7.

L'invention sera mieux comprise à la lecture de la description qui va suivre, donnée uniquement à titre d'exemple, et faite en se référant aux dessins annexés, sur lesquels :
- la figure 1 est une représentation schématique d'un dispositif de pilotage selon l'invention, et
- la figure 2 est un organigramme illustrant la mise en oeuvre d'un procédé de pilotage selon l'invention.

Dans la suite de la description, les expressions « sensiblement égal à », « de l'ordre de » et « environ » expriment une relation d'égalité à plus ou moins 10%.

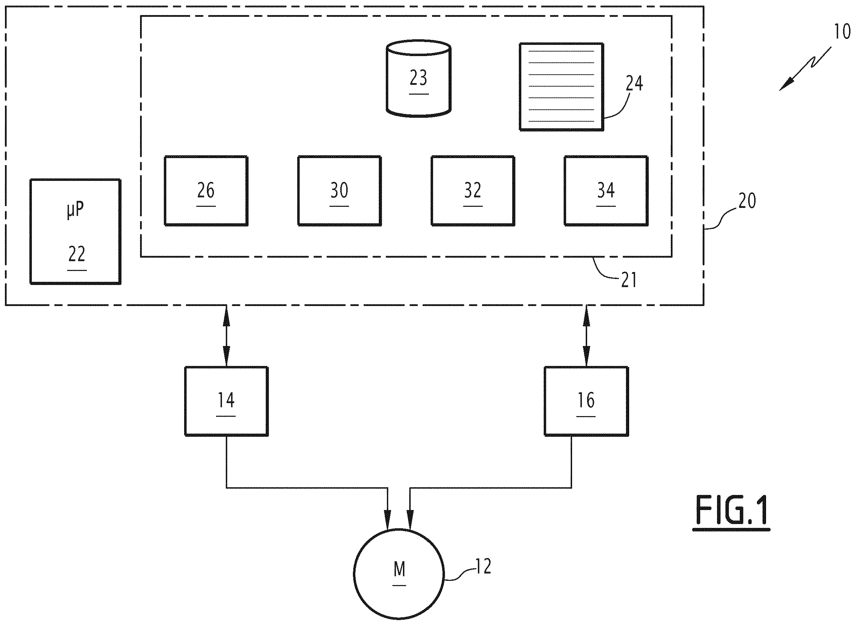

La figure 1 illustre un dispositif électronique de pilotage 10 selon l'invention destiné à être installé dans un véhicule de transport, par exemple un véhicule ferroviaire.

Le dispositif électronique de pilotage 10 est configuré pour piloter l'alimentation électrique d'un moteur électrique 12 par une source principale 14 d'énergie électrique et respectivement par une source secondaire 16 d'énergie électrique.

Le dispositif électronique de pilotage 10 comprend une unité de traitement 20 d'informations formée, par exemple, d'une mémoire 21 et d'un processeur 22 associé à la mémoire 21.

Le moteur électrique 12 est destiné à assurer les déplacements du véhicule de transport. Le moteur électrique 12 est, par exemple, un moteur asynchrone. En variante, le moteur 12 est un moteur synchrone.

La source principale 14 est reliée au moteur électrique 12 pour son alimentation. Elle comprend au moins un élément choisi parmi le groupe consistant en un caténaire, un moteur thermique, une pile à combustible, un système de captation par le sol, et un système de captation inductive.

La source secondaire 16 est également reliée au moteur électrique 12 pour son alimentation. Elle se distingue de la source principale 14 en ce qu'elle comprend au moins un organe de stockage d'énergie. L'énergie stockée par l'organe de stockage de la source secondaire 16 est, par exemple, générée lors du freinage du véhicule à partir d'un dispositif adéquat positionné au niveau de roues du véhicule.

La source secondaire 16 comprend au moins un élément de stockage d'énergie électrique choisi parmi le groupe consistant en une super capacité de stockage d'énergie électrique, un volant d'inertie de stockage d'énergie électrique, et une batterie électrochimique de stockage d'énergie électrique.

La mémoire 21 comprend une base de connaissances 23 et un registre 24 de fonctionnement des sources principale 14 et secondaire 16.

La base de connaissances 23 contient un ensemble d'informations relatives à des trajets précédemment effectués par le véhicule le long d'un parcours donné, c'est-à-dire le long d'un chemin donné à suivre par le véhicule. En particulier, à chaque précédent trajet, la base de connaissances 23 contient une puissance instantanée. La puissance P(t) instantanée est une fonction dépendant du temps et correspond à la variation dans le temps de la puissance électrique requise par le moteur électrique 12 durant le trajet du véhicule le long d'un parcours, ou chemin, donné.

En outre, la base de connaissances 23 contient un ensemble de données externes, décrites par la suite, associées à des trajets précédemment effectués par le véhicule le long d'un parcours donné.

La base de connaissances 23 contient également, pour chaque trajet précédemment réalisé par le véhicule le long d'un parcours donné, des première Q₁(t) et deuxième Q₂(t) quantités d'énergie. La première quantité Q₁(t) est une fonction dépendant du temps et correspond à la quantité d'énergie électrique fournie par la source principale 14 au cours du temps durant le trajet réalisé le long dudit parcours. De façon analogue, la deuxième quantité Q₂(t) est aussi une fonction dépendant du temps et correspond à la quantité d'énergie fournie par la source secondaire 16.

Le registre 24 contient un ensemble de données de fonctionnement des sources principale 14 et secondaire 16. Les données de fonctionnement correspondent, par exemple, à des informations techniques relatives à la source principale 14 et/ou à la source secondaire 16. A titre d'illustrations, une donnée de fonctionnement de la source secondaire 16 est sa durée de vie ou son rendement et une donnée de fonctionnement de la source principale 14 est sa durée de vie ou son rendement.

L'unité de traitement 20 est reliée aux sources principale 14 et secondaire 16.

L'unité de traitement 20 comprend une première unité de calcul 26, une deuxième unité de calcul 30, une troisième unité de calcul 32 et une unité de pilotage 34.

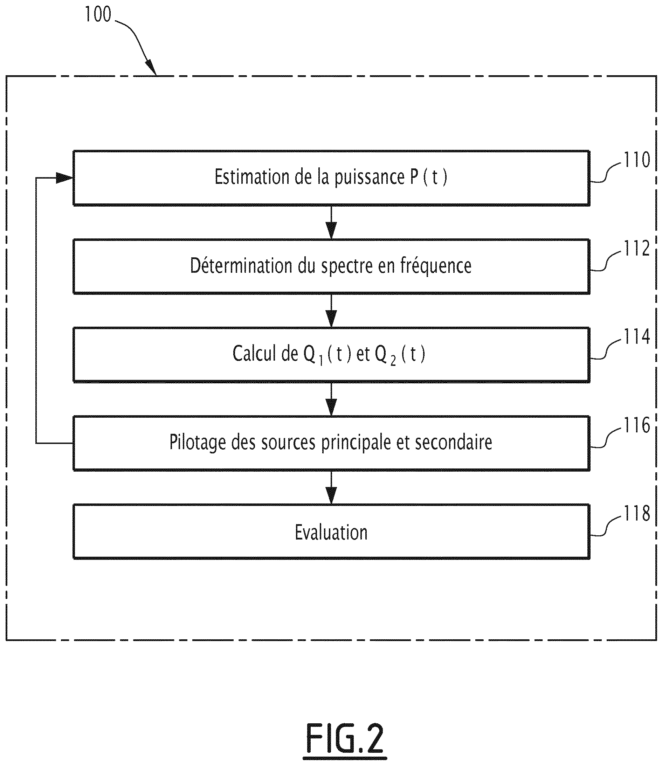

La première unité de calcul 26, la deuxième unité de calcul 30, la troisième unité de calcul 32 et l'unité de pilotage 34 sont, par exemple, réalisées chacune sous forme d'une application logicielle, stockée chacune dans la mémoire 21 de l'unité de traitement 20 et apte à être exécutée chacune par le processeur 22 de l'unité de traitement 20. L'ensemble de ces applications logicielles forme alors un produit programme d'ordinateur comportant des instructions logicielles, qui lorsqu'elles sont exécutées par un ordinateur, mettent en oeuvre le procédé de pilotage selon l'invention, qui sera décrit plus en détail par la suite en regard de la figure 2.

En variante, la première unité de calcul 26, la deuxième unité de calcul 30, la troisième unité de calcul 32 et l'unité de pilotage 34 sont réalisées chacune sous forme d'un ou plusieurs composants logiques programmables, tels qu'un ou plusieurs FPGA (de l'anglais *Field Programmable Gate Array*), ou encore sous forme d'un ou plusieurs circuits intégrés dédiés, tels qu'un ou plusieurs ASIC (de l'anglais *Application Specific Integrated Circuit).*

La première unité de calcul 26 est adaptée pour estimer une puissance P(t) instantanée nécessaire à un mouvement du véhicule lors du trajet le long d'un parcours donné à partir d'informations. Les informations sont d'une part, un profil du parcours, et d'autre part, des données externes.

Au profil du parcours donné est associée, par exemple, une puissance par défaut P₀(t) obtenue par simulation ou par enregistrement d'un trajet type effectué par le véhicule le long du parcours.

Les données externes, qui sont analogues à celles contenues dans la base de connaissances 23, sont qualifiées de données externes courantes et comportent, par exemple, au moins un élément parmi le groupe consistant en :
- le poids total du véhicule,
- des données météorologiques, telles la force du vent et la direction du vent, la présence de neige ou de verglas, l'existence d'intempéries et la localisation des intempéries, ou autres,
- l'instant, c'est-à-dire la date, de départ du véhicule, et
- des éventuels incidents d'exploitation.

La première unité de calcul 26 est adaptée pour lire des informations dans la base de connaissances 23 afin d'estimer la puissance instantanée nécessaire en fonction des informations lues. Elle est en particulier adaptée pour déterminer dans la base de connaissances 23 des précédents trajets stockés dont les données externes sont proches des données externes courantes. A titre d'illustration, si une donnée externe courante indique un vent de face de l'ordre de 60 km/heure, la première unité de calcul 26 est adaptée pour rechercher dans la base de connaissances 23 des trajets précédemment réalisés par le véhicule, le long du même parcours, avec un vent de face de l'ordre de 60 km/heure, c'est-à-dire égal à 60km/h à plus ou moins 10% près. Ainsi, la première unité de calcul 26 est adaptée pour affiner l'estimation de la puissance P(t) nécessaire à partir des puissances nécessaires durant les précédents trajets réalisés le long du même parcours et dont les données externes sont proches des données externes courantes.

La deuxième unité de calcul 30 est adaptée pour déterminer le spectre en fréquence de la puissance P(t) estimée par la première unité de calcul 26. La détermination d'un tel spectre de fréquence est connue de l'homme du métier et consiste, par exemple, à réaliser une transformée de Fourier de la fonction P(t), telle qu'une transformée de Fourier rapide ou FFT (de l'anglais *Fast Fourier Transform*).

La troisième unité de calcul 32 est adaptée pour lire des informations dans la base de connaissances 23 et dans le registre 24 et pour calculer une première et une deuxième quantités Q₁(t), Q₂(t) d'énergie électrique pour l'alimentation du moteur électrique (12). Comme indiqué précédemment, la première quantité Q₁(t) est fournie par la source principale 14, tandis que la deuxième quantité Q₂(t) est fournie par la source secondaire 16. La troisième unité de calcul 32 est adaptée effectuer le calcul à partir du spectre en fréquence de la puissance P(t) calculé par la deuxième unité de calcul 30.

Le calcul de la première quantité Q₁(t) est, par exemple, mise en oeuvre à partir de premières harmoniques du spectre de la puissance P(t), le calcul de la deuxième quantité Q₂(t) étant mise en oeuvre à partir des autres harmoniques du spectre de la puissance P(t). Les premières harmoniques sont, par exemple, la fondamentale et l'harmonique de rang 1 du spectre.

La détermination du spectre en fréquence de la puissance P(t) permet de séparer la puissance moyenne des puissances pics et résultant de facteurs de crête. Les besoins d'énergie moyens sont assurés par la source principale 14 selon la fonction Q₁(t) tandis que les besoins d'énergie ponctuels sont assurés par la source secondaire 16 selon la fonction Q₂(t), ou inversement.

La troisième unité de calcul 32 est également adaptée pour calculer la première et la deuxième quantités Q₁(t), Q₂(t) à partir de données de fonctionnement lues dans le registre 24. A titre d'illustration, le calcul de la deuxième quantité Q₂(t) sera fonction de la durée de vie restante de la source secondaire 16.

Avantageusement, la troisième unité de calcul 32 est adaptée pour calculer les première et deuxième quantités Q₁(t), Q₂(t) à partir de première et deuxième quantités Q₁(t), Q₂(t) correspondant à des trajets précédemment effectués le long du même parcours et contenues dans la base de connaissances 23.

A partir des première et deuxième quantités Q₁(t), Q₂(t), l'unité de pilotage 34 est adaptée pour piloter respectivement les sources principale 14 et secondaire 16. A cet effet, l'unité de pilotage 34 comprend, par exemple, des moyens de commande d'une génératrice de la source principale 14 ou d'un hacheur de la source secondaire 16.

L'unité de pilotage 34 est, en outre, adaptée pour mettre en oeuvre une évaluation de l'utilisation des sources principale 14 et secondaire 16. L'évaluation est calculée à partir de la consommation totale d'énergie. L'unité de pilotage 34 est également adaptée pour, à partir de l'évaluation réalisée, rechercher dans la base de connaissances 23 les évaluations calculées lors de trajets précédemment effectués par le véhicule le long du même parcours. Lorsque l'évaluation obtenue est supérieure aux évaluations précédentes, l'unité de pilotage 34 est adaptée pour enregistrer dans la base de connaissances 23 l'ensemble des informations associées audit parcours réalisé. Ces informations contiennent les données externes courantes, la puissance totale consommée, ainsi que les première et deuxième quantités Q₁(t), Q₂(t).

Un procédé 100 de pilotage de l'alimentation d'un moteur électrique selon l'invention va à présent être décrit en référence à la figure 2. Les étapes du procédé 100 décrites par la suite, ou au moins certaines de ces étapes, résultent de l'exécution par le processeur 22 d'instructions logicielles stockées dans la mémoire 21, ou en variante de la mise en oeuvre d'un ou plusieurs composants logiques programmables, tels qu'un ou plusieurs FPGA (de l'anglais *Field Programmable Gate Array*) ou encore d'un ou plusieurs circuits intégrés dédiés, tels qu'un ou plusieurs ASIC (de l'anglais *Application Specific Integrated Circuit*).

Dans une étape 110, la première unité de calcul 26 estime la puissance P(t) nécessaire au déplacement du véhicule lors du trajet le long d'un parcours donné. Initialement, la première unité de calcul 26 acquiert le profil du parcours, par exemple la puissance par défaut P₀(t). La première unité de calcul 26 acquiert également les données externes courantes. A partir des données externes courantes acquises, la première unité de calcul 26 effectue une recherche dans la base de connaissances 23, la recherche consistant à déterminer des trajets précédemment réalisés le long du même parcours dont les données externes sont proches des données externes courantes chargées.

La deuxième unité de calcul 30 reçoit la puissance P(t) estimée et détermine son spectre en fréquence dans une étape 112.

Dans une étape 114, la troisième unité de calcul 32 reçoit le spectre en fréquence de la puissance P(t) et calcule les première et deuxième quantités Q₁(t), Q₂(t). En particulier, la première quantité Q₁(t) est calculée à partir de la puissance moyenne nécessaire et déterminée à l'aide de premières harmoniques du spectre de la puissance P(t), avantageusement de la fréquence fondamentale et de l'harmonique de rang 1. Et la deuxième quantité Q₂(t) est calculée à partir des puissances crêtes nécessaires et déterminées à l'aide des autres harmoniques, avantageusement des harmoniques de rang 2 et supérieurs.

Durant cette étape 114, la troisième unité de calcul 32 utilise les données de fonctionnement contenues dans le registre 24. Avantageusement, la troisième unité de calcul 32 calcule les première et deuxième quantités Q₁(t), Q₂(t) à partir d'informations correspondant à des précédents trajets et lues dans la base de connaissances 23.

Dans le présent mode de réalisation, les étapes 110 à 116 sont mises en oeuvre au début du trajet. Alternativement, ces étapes sont, par exemple, mises en oeuvre au début de chaque inter-station, une inter-station représentant, par exemple, le parcours entre deux stations de métro. Selon d'autres modes de réalisation, ces étapes 110 à 116 sont mises en oeuvre en temps réel, par exemple à chaque modification des données externes courantes.

Dans une étape 118, l'unité de pilotage 34 reçoit les première et deuxième quantités Q₁(t), Q₂(t) afin de mettre en oeuvre un pilotage des sources principale 14 et secondaire 16. Les sources principale 14 et secondaire 16 délivrent alors chacune à la fois et/ou concomitamment de l'énergie électrique d'alimentation du moteur électrique 12.

Enfin, dans une étape 118, l'unité de pilotage 34 met en oeuvre une évaluation de l'utilisation des sources principale 14 et secondaire 16. Une fois l'évaluation réalisée, l'unité de pilotage 34 effectue une recherche dans la base de connaissances 23 pour déterminer si les informations relatives au parcours réalisé doivent être enregistrées dans la base de connaissances 23.

L'invention qui vient d'être décrite présente un certain nombre d'avantages.

Le fait que la répartition de l'énergie pour l'alimentation du moteur électrique 12 entre les sources principale 14 et secondaire 16 soit déterminée à partir d'un spectre en fréquence de la puissance P(t) permet de réduire le dimensionnement et la capacité de la source principale 14. En effet, les besoins de puissance crêtes sont alors fournis par la source secondaire 16 ce qui implique que la source principale 14 est sollicitée de façon plus régulière et à un niveau réduit. Le coût global du trajet est également réduit puisque l'énergie emmagasinée dans la source secondaire 16 est produite, par exemple, lors du freinage du train et ne nécessite ainsi pas de source d'énergie extérieure.

En outre, le dispositif électronique de pilotage 10 selon l'invention pilote l'utilisation respective des sources principale 14 et secondaire 16 en tenant compte de contraintes dynamiques à travers les données externes courantes.

Par ailleurs, la répartition de l'énergie entre les sources principale 14 et secondaire 16 est fonction de données de fonctionnements des sources 14 et 16 ce qui contribue à accroître leur longévité, par exemple en tenant compte de leur durée de vie restante respective.

De plus, la présente invention permet de bénéficier des expériences passées, à savoir des précédents trajets réalisés le long d'un même parcours, afin d'améliorer l'utilisation des sources 14 et 16.

Par ailleurs, le dispositif électronique de pilotage 10 est peu onéreux et facile à réaliser puisqu'il ne nécessite aucune modification du véhicule et requiert seulement des moyens de calcul et de stockage.

## Revendications

1. Procédé de pilotage de l'alimentation d'un moteur électrique (12) d'un véhicule de transport lors d'un trajet le long d'un parcours, le véhicule de transport comprenant une source principale (14) d'énergie électrique et une source secondaire (16) d'énergie électrique, la source secondaire (16) étant distincte de la source principale et comportant un organe de stockage d'énergie électrique, le moteur électrique (12) étant alimenté par au moins une source parmi la source principale (14) et la source secondaire (16),
le procédé étant mis en oeuvre par un dispositif électronique de pilotage (10) et comprenant les étapes (100) suivantes :
- estimation (110) d'une puissance (P(t)) électrique instantanée nécessaire au mouvement du véhicule lors du trajet,
- détermination (112) d'un spectre en fréquence de la puissance (P(t)) instantanée estimée,
- calcul (114) d'une première et d'une deuxième quantités (Q₁(t), Q₂(t)) d'énergie électrique pour l'alimentation du moteur électrique (12), le calcul étant mis en oeuvre à partir du spectre de la puissance déterminé, la première quantité (Q₁(t)) d'énergie électrique étant fournie par la source principale (14) et la deuxième quantité (Q₂(t)) d'énergie électrique étant fournie par la source secondaire (16), et
- pilotage (116) de la source principale (14) et de la source secondaire (16) en fonction respectivement des première et deuxième quantités (Q₁(t), Q₂(t)) d'énergie électrique calculées,
l'étape d'estimation (110) de la puissance (P(t)) instantanée étant mise en oeuvre à partir d'une puissance instantanée par défaut (P₀(t)) correspondant au trajet le long du parcours et de données externes courantes, les données externes courantes comportant au moins un élément parmi le groupe consistant en :
- un poids total du véhicule,
- des données météorologiques, telles que la force du vent et la direction du vent, la présence de neige ou de verglas, la présence d'intempéries et la localisation des intempéries,
- l'instant de départ du véhicule, et
- d'éventuels incidents d'exploitation,
les étapes (100) du procédé étant mises en oeuvre à partir d'une base de connaissances (23), la base de connaissances (23) contenant des puissances instantanées correspondant à des trajets précédents le long du parcours, chaque puissance instantanée étant associée dans la base de connaissances (23) à des données externes correspondant audit trajet,
la base de connaissances (23) contenant des premières et deuxièmes quantités correspondant à des précédents trajets le long du parcours, le calcul des première et deuxième quantités (Q₁(t), Q₂(t)) étant mis en oeuvre à partir de premières et deuxièmes quantités stockées dans la base de connaissances (23).

2. Procédé selon la revendication 1, dans lequel l'étape de calcul (114) de la première quantité (Q₁(t)) est mise en oeuvre à partir de premières harmoniques du spectre de la puissance (P(t)) instantanée et dans lequel le calcul de la deuxième quantité (Q₂(t)) est mis en oeuvre à partir des autres harmoniques du spectre de la puissance (P(t)) instantanée.

3. Procédé selon la revendication 1 ou 2, dans lequel l'étape de calcul (114) des première et deuxième quantités (Q₁(t), Q₂(t)) est mise en oeuvre à partir de données de fonctionnement des sources principale (14) et secondaire (16) stockées dans un registre (24) de données de fonctionnement du dispositif électronique de pilotage (10).

4. Dispositif électronique de pilotage (10) de l'alimentation d'un moteur électrique (12) d'un véhicule de transport lors d'un trajet le long d'un parcours, le véhicule de transport comprenant une source principale (14) d'énergie électrique et une source secondaire (16) d'énergie électrique, la source secondaire (16) étant distincte de la source principale (14) et comportant un organe de stockage d'énergie électrique, le moteur électrique (12) étant alimenté par au moins une source parmi la source principale (14) et la source secondaire (16),
le dispositif comprenant en outre :
- une première unité de calcul (26) adaptée pour estimer une puissance (P(t)) électrique instantanée nécessaire à un mouvement du véhicule lors du trajet,
- une deuxième unité de calcul (30) adaptée pour déterminer un spectre en fréquence de la puissance (P(t)) instantanée estimée par la première unité de calcul (26),
- une troisième unité de calcul (32) adaptée pour calculer une première et une deuxième quantités (Q₁(t), Q₂(t)) d'énergie électrique pour l'alimentation du moteur électrique (12), le calcul étant mis en oeuvre à partir du spectre de la puissance (P(t)) déterminé par la deuxième unité de calcul (30), la première quantité (Q₁(t)) d'énergie électrique étant fournie par la source principale (14) et la deuxième quantité (Q₂(t)) d'énergie électrique étant fournie par la source secondaire (16), et
- une unité de pilotage (34) adaptée pour piloter la source principale (14) et la source secondaire (16) en fonction respectivement des première et deuxième quantités (Q₁(t), Q₂(t)) d'énergie électrique calculées par la troisième unité de calcul (32),
la puissance instantanée (P(t)) étant estimée à partir d'une puissance instantanée par défaut (P₀(t)) correspondant au trajet le long du parcours et de données externes courantes, les données externes courantes comportant au moins un élément parmi le groupe consistant en :
- un poids total du véhicule,
- des données météorologiques, telles que la force du vent et la direction du vent, la présence de neige ou de verglas, la présence d'intempéries et la localisation des intempéries,
- l'instant de départ du véhicule, et
- d'éventuels incidents d'exploitation,
le dispositif comprenant en outre une base de connaissances (23), la base de connaissances (23) contenant des puissances instantanées correspondant à des trajets précédents le long du parcours, chaque puissance instantanée étant associée dans la base de connaissances (23) à des données externes correspondant audit trajet,
la base de connaissances (23) contenant des premières et deuxièmes quantités correspondant à des précédents trajets le long du parcours, le calcul des première et deuxième quantités (Q₁(t), Q₂(t)) étant mis en oeuvre à partir de premières et deuxièmes quantités stockées dans la base de connaissances (23).

5. Dispositif électronique de pilotage (10) selon la revendication 4, dans lequel la source principale (14) comprend au moins un élément choisi parmi le groupe consistant en :
- un caténaire,
- un moteur thermique,
- une pile à combustible,
- un système de captation par le sol, et
- un système de captation inductive.

6. Dispositif électronique de pilotage (10) selon la revendication 4 ou 5, dans lequel la source secondaire (16) comprend au moins un élément de stockage d'énergie électrique choisi parmi le groupe consistant en :
- une super capacité de stockage d'énergie électrique,
- un volant d'inertie de stockage d'énergie électrique, et
- une batterie électrochimique de stockage d'énergie électrique.

7. Véhicule de transport comprenant :
- un moteur électrique (12), et
- une source principale (14) et une source secondaire (16) chacune destinée à alimenter le moteur électrique (12),
**caractérisé en ce qu'**il comprend un dispositif électronique de pilotage (10) selon l'une quelconque des revendications 4 à 6.

## Patentansprüche

1. Verfahren zum Steuern der Versorgung eines elektrischen Motors (12) eines Transportfahrzeugs bei einer Fahrt entlang einer Strecke, wobei das Transportfahrzeug eine elektrische Hauptenergiequelle (14) und eine elektrische Nebenenergiequelle (16) umfasst und die Nebenquelle (16) unterschiedlich zur Hauptquelle ist und ein Element zum Speichern von elektrischer Energie aufweist, wobei der elektrische Motor (12) durch mindestens eine Quelle, ausgewählt aus der Hauptquelle (14) und der Nebenquelle (16), versorgt wird,
wobei das Verfahren von einer elektronischen Steuervorrichtung (10) durchgeführt wird und die folgenden Schritte (100) umfasst:
- Schätzen (110) einer momentanen elektrischen Leistung (P(t)), die für die Bewegung des Fahrzeugs bei der Fahrt notwendig ist,
- Bestimmen (112) eines Frequenzspektrums der momentanen geschätzten Leistung (P(t)),
- Berechnen (114) einer ersten und einer zweiten elektrischen Energiemenge (Q₁(t)), Q₂(t)) für die Versorgung des elektrischen Motors (12), wobei das Berechnen aus dem bestimmten Spektrum der Leistung durchgeführt wird, wobei die erste elektrische Energiemenge (Q₁(t)) von der Hauptquelle (14) geliefert wird und die zweite elektrische Energiemenge (Q₂(t)) von der Nebenquelle (16) geliefert wird, und
- Steuern (116) der Hauptquelle (14) und der Nebenquelle (16) abhängig jeweils von der ersten und zweiten berechneten elektrischen Energiemenge (Q₁(t)), Q₂(t)),
wobei der Schritt des Schätzens (110) der momentanen Leistung (P(t)) aus einer momentanen Standardleistung (P₀(t)) entsprechend einer Fahrt entlang der Strecke und aktuellen externen Daten durchgeführt wird, wobei die aktuellen externen Daten mindestens ein Element aus der Gruppe aufweisen, die besteht aus:
- einem Gesamtgewicht des Fahrzeugs,
- meteorologischen Daten, wie die Windstärke und die Richtung des Windes, das Vorhandensein von Schnee oder Eisglätte, das Vorhandensein von Unwettern und die Lokalisierung von Unwettern,
- dem Abfahrtszeitpunkt des Fahrzeugs, und
- möglichen Betriebsstörungen,
wobei die Schritte (100) des Verfahrens aus einer WissensWissensdatenbank (23) durchgeführt werden, wobei die Wissensdatenbank (23) momentane Leistungen enthält, die vorherigen Fahrten entlang der Strecke entsprechen, wobei jede momentane Leistung in der Wissensdatenbank (23) externen Daten entsprechend der Fahrt zugeordnet ist, wobei die Wissensdatenbank (23) die ersten und zweiten Mengen entsprechend den vorherigen Fahrten entlang der Strecke enthält, wobei die Berechnung der ersten und zweiten Menge (Q₁(t), Q₂(t)) aus der ersten und zweiten Menge durchgeführt wird, die in der Wissensdatenbank (23) gespeichert sind.

2. Verfahren nach Anspruch 1, bei dem der Schritt des Berechnens (114) der ersten Menge (Q₁(t)) aus ersten Harmonischen des Spektrums der momentanen Leistung (P(t)) durchgeführt wird und bei dem die Berechnung der zweiten Menge (Q₂(t)) aus den anderen Harmonischen des Spektrums der momentanen Leistung (P(t) durchgeführt wird.

3. Verfahren nach Anspruch 1 oder 2, bei dem der Schritt des Berechnens (114) der ersten und zweiten Menge (Q₁(t), Q₂(t)) aus Betriebsdaten der Hauptquelle (14) und der Nebenquelle (16) durchgeführt wird, die in einem Betriebsdatenregister (24) der elektronischen Steuervorrichtung (10) gespeichert sind.

4. Elektronische Steuervorrichtung (10) der Versorgung eines elektrischen Motors (12) eines Transportfahrzeugs bei einer Fahrt entlang einer Strecke, wobei das Transportfahrzeug eine elektrische Hauptenergiequelle (14) und eine elektrische Nebenenergiequelle (16) umfasst und die Nebenquelle (16) unterschiedlich zur Hauptquelle ist und ein Element zum Speichern von elektrischer Energie aufweist, wobei der elektrische Motor (12) durch mindestens eine Quelle, ausgewählt aus der Hauptquelle (14) und der Nebenquelle (16), versorgt wird,
wobei die Vorrichtung außerdem umfasst:
- eine erste Berechnungseinheit (26), die geeignet ist, eine momentane elektrische Leistung (P(t)) zu schätzen, die für eine Bewegung des Fahrzeugs bei der Fahrt notwendig ist,
- eine zweite Berechnungseinheit (30), die geeignet ist, ein Frequenzspektrum der momentanen Leistung (P(t)) zu bestimmen, die von der ersten Berechnungseinheit (26) geschätzt wird,
- eine dritte Berechnungseinheit (32), die geeignet ist, eine erste und eine zweite elektrische Energiemenge (Q₁(t)), (Q₂(t)) für die Versorgung des elektrischen Motors zu berechnen, wobei die Berechnung aus dem Spektrum der von der zweiten Berechnungseinheit (30) bestimmten Leistung durchgeführt wird, wobei die erste elektrische Energiemenge (Q₁(t)) von der Hauptquelle (14) und die zweite elektrische Energiemenge (Q₂(t)) von der Nebenquelle (16) geliefert wird, und
- eine Steuereinheit (34), die geeignet ist, die Hauptquelle (14) und die Nebenquelle (16) jeweils abhängig von der ersten und zweiten elektrischen Energiemenge (Q₁(t), (Q₂(t)) zu steuern, die von der dritten Berechnungseinheit (32) berechnet wird,
wobei die momentane Leistung (P(t)) aus einer momentanen Standardleistung (P₀(t)) entsprechend einer Fahrt entlang der Strecke und aktuellen externen Daten durchgeführt wird, wobei die aktuellen externen Daten mindestens ein Element aus der Gruppe aufweisen, die besteht aus:
- einem Gesamtgewicht des Fahrzeugs,
- meteorologischen Daten, wie die Windstärke und die Richtung des Windes, das Vorhandensein von Schnee oder Eisglätte, das Vorhandensein von Unwettern und die Lokalisierung von Unwettern,
- dem Abfahrtszeitpunkt des Fahrzeugs, und
möglichen Betriebsstörungen,
wobei die Vorrichtung außerdem eine Wissensdatenbank (23) aufweist, wobei die Wissensdatenbank (23) momentane Leistungen enthält, die vorherigen Fahrten entlang der Strecke entsprechen, wobei jede momentane Leistung in der Wissensdatenbank (23) externen Daten entsprechend der Fahrt zugeordnet ist,
wobei die Wissensdatenbank (23) die ersten und zweiten Mengen entsprechend den vorherigen Fahrten entlang der Strecke enthält, wobei die Berechnung der ersten und zweiten Menge (Q₁(t), Q₂(t)) aus der ersten und zweiten Menge durchgeführt wird, die in der Wissensdatenbank (23) gespeichert sind.

5. Elektronische Steuervorrichtung (10) nach Anspruch 4, bei der die Hauptquelle (14) mindestens ein Element ausgewählt aus der Gruppe umfasst, die besteht aus:
- einer Oberleitung,
- einem Wärmemotor,
- einer Brennstoffzelle,
- einem Bodenabnehmersystem, und
- einem induktiven Abnehmersystem.

6. Elektronische Steuervorrichtung (10) nach Anspruch 4 oder 5, bei der die Nebenquelle (16) ein Element zum Speichern von elektrischer Energie umfasst, ausgewählt aus der Gruppe, die besteht aus:
- einem Superkondensator zum Speichern von elektrischer Energie,
- einer Schwungscheibe zum Speichern von elektrischer Energie, und
- einer elektrochemischen Batterie zum Speichern von elektrischer Energie.

7. Transportfahrzeug, umfassend
- einen elektrischen Motor (12), und
- eine Hauptquelle (14) und eine Nebenquelle (16), die jeweils vorgesehen sind, den elektrischen Motor (12) zu versorgen, **dadurch gekennzeichnet, dass** es eine elektronische Steuervorrichtung (10) nach einem beliebigen der Ansprüche 4 bis 6 umfasst.

## Claims

1. Method for controlling the power supply of an electric motor (12) of a transport vehicle during a journey along a route, the transport vehicle comprising a main source (14) of electrical energy and a secondary source (16) of electrical energy, the secondary source (16) being distinct from the main source and comprising an electrical energy storage member, the electric motor (12) being powered by at least one source out of the main source (14) and the secondary source (16),
the method being implemented by a controlling electronic device (10) and comprising the following steps (100):
- estimation (110) of an instantaneous electrical power (P(t)) necessary to the movement of the vehicle during the journey,
- determination (112) of a frequency spectrum of the estimated instantaneous power (P(t)),
- computation (114) of a first and of a second quantities (Q₁(t), Q₂(t)) of electrical energy for powering the electric motor (12), the computation being implemented on the basis of the determined power spectrum, the first quantity (Q₁(t)) of electrical energy being supplied by the main source (14) and the second quantity (Q₂(t)) of electrical energy being supplied by the secondary source (16), and
- controlling (116) of the main source (14) and of the secondary source (16) as a function respectively of the first and second computed quantities (Q₁(t), Q₂(t)) of electrical energy,
the step of estimation (110) of the instantaneous power (P(t)) being implemented on the basis of a default instantaneous power (P₀(t)) corresponding to the journey along the route and of current external data, the current external data comprising at least one element out of the group consisting of:
- a total weight of the vehicle,
- meteorological data, such as the force of the wind and the wind direction, the presence of snow or of ice, the presence of bad weather and the location of bad weather,
- the time of departure of the vehicle, and
- any operating incidents,
the steps (100) of the method being implemented on the basis of a knowledge base (23), the knowledge base (23) containing instantaneous powers corresponding to preceding journeys along the route, each instantaneous power being associated in the knowledge base (23) with external data corresponding to said journey,
the knowledge base (23) containing first and second quantities corresponding to preceding journeys along the route, the computation of the first and second quantities (Q₁(t), Q₂(t)) being implemented on the basis of first and second quantities stored in the knowledge base (23).

2. Method according to Claim 1, in which the step of computation (114) of the first quantity (Q₁(t)) is implemented on the basis of first harmonics of the spectrum of the instantaneous power (P(t)) and in which the computation of the second quantity (Q₂(t)) is implemented on the basis of the other harmonics of the spectrum of the instantaneous power (P(t)).

3. Method according to Claim 1 or 2, in which the step of computation (114) of the first and second quantities (Q₁(t), Q₂(t)) is implemented on the basis of operating data of the main (14) and secondary (16) sources stored in a register (24) of operating data of the controlling electronic device (10).

4. Electronic device (10) for controlling the power supply of an electric motor (12) of a transport vehicle during a journey along a route, the transport vehicle comprising a main source (14) of electrical energy and a secondary source (16) of electrical energy, the secondary source (16) being distinct from the main source (14) and comprising an electrical energy storage member, the electric motor (12) being powered by at least one source out of the main source (14) and the secondary source (16),
the device further comprising:
- a first computation unit (26) suitable for estimating an instantaneous electric power (P(t)) necessary to a movement of the vehicle during the journey,
- a second computation unit (30) suitable for determining a frequency spectrum of the instantaneous power (P(t)) estimated by the first computation unit (26),
- a third computation unit (32) suitable for computing a first and a second quantity (Q₁(t), Q₂(t)) of electrical energy for powering the electric motor (12), the computation being implemented on the basis of the spectrum of the power (P(t)) determined by the second computation unit (30), the first quantity (Q₁(t)) of electrical energy being supplied by the main source (14) and the second quantity (Q₂(t)) of electrical energy being supplied by the secondary source (16), and
- a controlling unit (34) suitable for controlling the main source (14) and the secondary source (16) as a function respectively of the first and second quantities (Q₁(t), Q₂(t)) of electrical energy computed by the third computation unit (32),
the instantaneous power (P (t)) being estimated on the basis of a default instantaneous power (P₀(t)) corresponding to the journey along the route and of current external data, the current external data comprising at least one element out of the group consisting of:
- a total weight of the vehicle,
- meteorological data, such as the force of the wind and the wind direction, the presence of snow or of ice, the presence of bad weather and the location of bad weather,
- the time of departure of the vehicle, and
- any operating incidents,
the device further comprising a knowledge base (23), the knowledge base (23) containing instantaneous powers corresponding to preceding journeys along the route, each instantaneous power being associated in the knowledge base (23) with external data corresponding to said journey,
the knowledge base (23) containing first and second quantities corresponding to preceding journeys along the route, the computation of the first and second quantities (Q₁(t), Q₂(t)) being implemented on the basis of first and second quantities stored in the knowledge base (23).

5. Controlling electronic device (10) according to Claim 4, in which the main source (14) comprises at least one element chosen from the group consisting of:
- an overhead contact line,
- a heat engine,
- a fuel cell,
- a ground collection system, and
- an inductive collection system.

6. Controlling electronic device (10) according to Claim 4 or 5, in which the secondary source (16) comprises at least one electrical energy storage element chosen from the group consisting of:
- an electrical energy storage supercapacitor,
- an electrical energy storage flywheel, and
- an electrical energy storage electrochemical battery.

7. Transport vehicle comprising:
- an electric motor (12), and
- a main source (14) and a secondary source (16) each intended to power the electric motor (12), **characterized in that** it comprises a controlling electronic device (10) according to any one of Claims 4 to 6.
